# EUROPEAN PATENT APPLICATION

(11) **EP 1 810 956 A1**
(43) Date of publication of application: **25.07.2007**
(21) Application number: 04732811.7
(22) Date of filing: 13.05.2004
(51) Int. Cl.: C04B 35/66

(54) **ZIRCONIA BASED MONOTHILIC REFRACTORY**

(30) Priority: 14.05.2003 JP 2003136124
(71) Applicant: Asahi Glass Ceramics Co., Ltd., Tokyo 108-0014 (JP)
(72) Inventor: ONO, Yasushi, c/o Asahi Glass Ceramics, Co., Ltd., Takasago-shi, Hyogo 6760074 (JP); KIDO, Nobuyuki, c/o Asahi Glass Ceramics, Co., Ltd, Takasago-shi, Hyogo 6760074 (JP)
(74) Representative: Müller-Boré & Partner Patentanwälte
(86) International application number: PCT/JP2004/006802
(87) International publication number: WO 2004/101466

(57) **Abstract**

It is an object of the present invention to provide a zirconia-based monolithic refractory which is excellent in corrosion resistance and penetration resistance against molten glass, and anti-contamination property for molten glass and which is suitable as a tamping material for a glass furnace, excellent in workability and durability.

The present invention provides a zirconia-based monolithic refractory **characterized in that** it is a monolithic refractory comprising from 70 to 95 mass% of zirconia particles (as calculated as ZrO₂) from 2 to 12 mass% of alumina particles, from 1 to 10 mass% of a binder and from 2 to 8 mass% of a glass content (including a glass phase if such a glass phase is contained in the zirconia particles), and it contains substantially no alumina cement in the monolithic refractory.

## Description

### TECHNICAL FIELD

The present invention relates to a zirconia-based monolithic refractory, particularly a zirconia-based monolithic refractory suitable for constituting the bottom structure of a glass furnace.

### BACKGROUND ART

In a glass furnace, electrofused cast refractories (hereinafter referred to as electrocast refractories) of e.g. zirconia are used as refractories at a portion which is in contact directly with molten glass, from the viewpoint of corrosion resistance and anti-contamination property for molten glass. As such electrocast refractories, ones having large sizes are used to minimize contact portions (hereinafter referred to as joint portions) of the refractories to one another, but there is an upper limit in the producible size, and the glass furnace is accordingly obliged to have joint portions. As a refractory (sub-paving) to support electrocast refractories constituting the furnace bottom (bottom paving) or such joint portions, a monolithic refractory may be mentioned which is usually called a ramming material, a stamping material or a tamping material (hereinafter generally referred to as a tamping material).

As such a monolithic refractory for a glass furnace, a monolithic refractory comprising from 55 to 98 mass% of Al₂O₃-ZrO₂-SiO₂ (hereinafter referred simply as AZS) type fused cast refractory particles and from 1 to 5 mass% of hydraulic cement such as alumina cement, is proposed in JP-B-58-46475. However, the proposed refractory contained hydraulic cement, and accordingly, when it is used as sub-paving, the applied surface tends to have large irregularities, whereby electrocast refractories can not be directly mounted thereon, and it is necessary to use mortar separately to make the irregularities on the surface smooth. As such mortar, an alumina-zirconia mortar may be mentioned, but it is usually inferior in corrosion resistance, penetration resistance or anti-contamination property for molten glass, and thus is likely to present an adverse effect to e.g. corrosion resistance of the electrocast refractories.

Further, it is preferred that the electrocast refractories are zirconia-based, since it is thereby possible to avoid a trouble due to e.g. a difference in the thermal expansion coefficient if the monolithic refractory in contact therewith is also made of the same type of zirconia. However, the AZS type monolithic refractory proposed in JP-B-58-46475 is not necessarily satisfactory also from this viewpoint. Further, from the viewpoint of the corrosion resistance and penetration resistance against molten glass, a zirconia-based refractory is superior to the AZS type refractory in the properties. Accordingly, a zirconia-based monolithic refractory suitable for a glass furnace is desired.

As a zirconia-based monolithic refractory for various furnaces or for portions in contact with a melt, one comprising fused zirconia particles and alumina cement particles, is.proposed in JP-A-63-103869, but it has problems as mentioned above, since alumina cement particles are used therein. Further, as a zirconia-based monolithic refractory for various furnaces, for ash melting treatment or for incinerators, one comprising from 4.5 to 49.5 mass% of fused zirconia particles, from 45 to 94 mass% of alumina particles and from 0.3 to 10 mass% of alumina cement particles, is proposed in JP-A-2000-281455, but it has problems as mentioned above, since alumina cement is used therein, and further, since the amount of fused zirconia particles is less than 50 mass%, the properties are not necessarily adequate for a glass furnace.

Further, JP-A-7-293851 discloses that one employing fused zirconia particles as a zirconia-based refractory for a waste melting furnace, can be used as a monolithic refractory other than a calcined refractory, but there is no specific proposal disclosed with respect to such a monolithic refractory.

In any case, there has been no proposal for a zirconia-based monolithic refractory which contains no alumina cement and which is excellent in corrosion resistance and penetration resistance against molten glass and anti-contamination property for molten glass and suitable as a tamping material for a glass furnace.

### DISCLOSURE OF THE INVENTION

It is an object of the present invention to provide a zirconia-based monolithic refractory which is excellent in corrosion resistance and penetration resistance against molten glass and which is suitable as a monolithic refractory for the bottom of a glass furnace and yet excellent in workability.

The present invention provides a zirconia-based monolithic refractory characterized in that it is a monolithic refractory comprising from 70 to 95 mass% of zirconia particles (as calculated as ZrO₂), from 2 to 12 mass% of alumina particles, from 1 to 10 mass% of a binder and from 2 to 8 mass% of a glass content (including a glass phase if such a glass phase is contained in the zirconia particles), and it contains substantially no alumina cement in the monolithic refractory.

### BEST MODE FOR CARRYING OUT THE INVENTION

The zirconia-based monolithic refractory of the present invention (hereinafter referred to as the present monolithic refractory) is characterized in that it is a monolithic refractory comprising from 70 to 95 mass% of zirconia particles (as calculated as ZrO₂), from 2 to 12 mass% of alumina particles, from 1 to 10 mass% of a binder and from 2 to 8 mass% of a glass content (including a glass phase if such a glass phase is contained in the zirconia particles), and it contains substantially no alumina cement in the monolithic refractory.

In the present monolithic refractory, the zirconia particles are not particularly limited so long as they are ones comprising ZrO₂ crystal phase containing at least monoclinic crystal (hereinafter referred to simply as ZrO₂ crystal phase). It is preferred that the ZrO₂ crystal phase consists essentially of monoclinic crystal, since it is thereby stable at room temperature, and there will be no substantial volume change at low temperatures, when the temperature is raised for use.

Such zirconia particles may, for example, be fused zirconia containing a glass phase, or zirconia particles obtainable by silica removal of zircon. In this specification, zirconia particles other than fused zirconia particles will be generally referred to as non-fused zirconia particles. In a case where fused zirconia particles are used as the zirconia particles, the content in the monolithic refractory is calculated as ZrO₂ and is one having the glass phase content subtracted. For example, in a case where a monolithic refractory contains 90% of fused zirconia particles (containing 5% of a glass phase), the content as zirconia particles is 90×0.95=85.5%. The glass phase content 90x0.05=4.5% is counted as the glass content in the present monolithic refractory.

It is preferred to use fused zirconia particles as the zirconia particles, since the homogeneity is thereby improved with little localization of the glass content. The fused zirconia particles are more preferably ones comprising from 85 to 97% of a ZrO₂ crystal phase and from 3 to 15% of a glass phase. If the ZrO₂ crystal phase in the fused zirconia particles is less than 85%, the corrosion resistance and penetration resistance against molten glass are likely to be inadequate. On the other hand, if the ZrO₂ crystal phase exceeds 97%, the amount of the glass phase tends to be too small, whereby absorption of the volume change due to transfer between monoclinic crystal and tetragonal crystal is likely to be inadequate. It is more preferred that the constituting component of the glass phase of the fused zirconia particles is an AZS type, whereby improvement of the corrosion resistance can be expected.

In the present monolithic refractory, if an iron content is included in a large amount in the zirconia particles for some reason, for example, in the process for controlling the particle size, the anti-contamination property for molten glass or the penetration resistance of the present monolithic refractory is likely to be thereby deteriorated. The content of iron in the zirconia particles is preferably at most 0.15% as calculated as Fe₂O₃ from the viewpoint of the corrosion resistance against glass and the anti-contamination property for molten glass. The content of iron in the zirconia particles is more preferably at most 0.10%, particularly preferably at most 0.08%, as calculated as Fe₂O₃. Here, in this specification, iron in the zirconia particles includes not only a case where iron is contained as a component of the zirconia particles but also a case where iron content particles are fixed to the surface of zirconia particles.

In the present monolithic refractory, the content of iron is preferably at most 0.15% as calculated as Fe₂O₃ from the viewpoint of the corrosion resistance against glass and the anti-contamination property for molten glass. The content of iron is more preferably at most 0.10%, particularly preferably at most 0.08%, as calculated as Fe₂O₃.

In the present monolithic refractory, the particle diameters of zirconia particles (hereinafter referred to simply as the particle diameters) are not particularly limited so long as the particle diameters are at most 5 mm. It is preferred to use particles having particle diameters of from 5 mm to 30 µm. The mass ratio, as calculated as ZrO₂, of zirconia particles having particle diameters of from 5 mm to 300 µm (hereinafter referred to also as particles Z1) to zirconia particles having particle sizes of less than 300 µm (hereinafter referred to also as particles Z2) (=particles Z1/particles Z2) is more preferably from 0.5 to 2, particularly preferably from 0.8 to 1.2.

In the present monolithic refractory, the zirconia particles preferably serve not only as aggregate but also as fine particles to impart corrosion resistance, etc. of the binder portion between aggregates. Non-fused zirconia particles are readily available in the form of fine particles. Accordingly, it is preferred to employ fused zirconia particles as aggregate particles and to employ non-fused zirconia particles as fine particles to be used for the binder portion, whereby a monolithic refractory satisfying both the properties and economical efficiency can be obtained. It is particularly preferred that in the zirconia particles, fused zirconia particles are from 80 to 95% as calculated as ZrO₂, and the non-fused zirconia particles are from 5 to 20% as calculated as ZrO₂. Further, the particle sizes of the above fine particles are preferably at most 0.2 mm, more preferably at most 0.15 mm.

In the present monolithic refractory, the zirconia particles are from 70 to 95% as calculated as ZrO₂. If in the present monolithic refractory, the zirconia particles are less than 70% as calculated as ZrO₂, the corrosion resistance and penetration resistance against molten glass and the anti-contamination property for molten glass, which ZrO₂ has, are likely to be inadequate. On the other hand, if in the present monolithic refractory, the zirconia particles exceed 95% as calculated as ZrO₂, the workability as a monolithic refractory tends to be too low. In the present monolithic refractory, the zirconia particles are preferably at least 75%, more preferably at least 80%, as calculated as ZrO₂.

The present monolithic refractory contains from 2 to 8% of a glass content. In this specification, in a case where a glass phase is contained in the zirconia particles, such a glass phase is included in the glass content. The glass content serves mainly to absorb the volume change due to the transfer between the monoclinic crystal and the tetragonal crystal of ZrO₂. For the glass content, glass particles may be added, or it may be a glass phase in the fused zirconia particles.

In a case where glass particles are to be employed, the particle diameters of the glass particles are preferably at most 0.2 mm, more preferably at most 0.1 mm. The composition of the glass particles is preferably an AZS type or the like. It is preferred that the glass content in the present monolithic refractory is one derived from the glass phase in the fused zirconia particles, whereby absorption of the volume change by the glass content will be more effective. Further, in the present monolithic refractory, the glass content may be a combination of glass particles and a glass phase in the fused zirconia particles.

The present monolithic refractory contains from 2 to 12% of alumina particles. In the present monolithic refractory, the alumina particles are not particularly limited, but ones having a high purity are preferred, since shrinkage after heating is small, and defects such as cracks tend to scarcely be formed in the applied body of the monolithic refractory. The purity of the alumina particles is preferably at least 90%, more preferably at least 95%. The alumina particles may, for example, be calcined alumina (Bayer alumina) obtained by calcining aluminum-hydroxide obtained by a Bayer method or sintered alumina (tabular alumina) obtained by further firing calcined alumina, as well as colloidal alumina derived from an alumina sol.

As the alumina particles for the present monolithic refractory, sintered alumina is preferred from the viewpoint of e.g. corrosion resistance. The particle sizes of alumina particles are preferably at most 100 µm, whereby the effect for dispersibility is obtainable in a small amount of addition, and the workability will be improved. The particles sizes of alumina particles are more preferably at most 75 µm, particularly preferably at most 45 µm.

In the present monolithic refractory, the alumina particles serve mainly as a dispersant, and such effects are remarkable particularly when the binder contains a phosphoric acid and/or a phosphate. Namely, it is considered that the isoelectric point of the zirconia particles is located on an acidic side, and only by a binder of a phosphoric acid and/or phosphate type, no adequate dispersibility tends to be obtainable at the time of the application, but by using alumina particles having an isoelectric point on an alkali side in combination, the dispersibility of the zirconia particles will be improved, and the workability will thereby be improved.

In the present monolithic refractory, if the content of the alumina particles is less than 2%, no adequate effect for improvement of the workability of the monolithic refractory by the addition of the alumina particles tends to be obtainable. On the other hand, if the content of the alumina particles in the present monolithic refractory exceeds 12%, the corrosion resistance or penetration resistance is likely to be inadequate. The content in the present monolithic refractory is more preferably from 3 to 9%.

The present monolithic refractory preferably contains silica particles as a binder, whereby increase of the viscosity at the time of the application can be suppressed, or curing of the applied body after the application can be accelerated. The silica particles are not particularly limited, but they are preferably ones having a purity of at least 90%. Such silica particles may, for example, be fumed silica (silica flour), white carbon or colloidal silica derived from a silica sol. The particle sizes of the silica particles are preferably at most 10 µm, whereby the above effects can readily be obtained, and they are more preferably at most 1 µm. The amount of the silica particles to be added is preferably at most 7%, more preferably from 1 to 5%, particularly preferably from 2 to 4%, in the present monolithic refractory.

The present monolithic refractory contains substantially no alumina cement. In this specification, "contains substantially no alumina cement" means that the content of alumina cement is not more than 0.1% or no peak of alumina cement can clearly be identified even by the X-ray diffraction measurement.

In the present monolithic refractory, the binder is not particularly limited so long as it is one having a small alkali content, and it is preferably one containing a phosphoric acid and/or a phosphate, whereby the workability will be improved, and sufficient strength can be obtained. The phosphoric acid may, for example, be orthophosphoric acid, hypophosphorous acid, phosphorous acid, metaphosphoric acid or pyrophosphoric acid, and orthophosphoric acid is preferably used.

The phosphate may, for example, be an orthophosphate, a polyphosphate or a metaphosphate, and sodium metaphosphate may, for example, be mentioned. Phosphoric acids or phosphates may preferably be used alone or in combination. The amount of the phosphoric acid and/or phosphate to be added is preferably at least 80% in the binder, more preferably at least 90% in the binder.

For the application of the present monolithic refractory, a usual method for the application of a monolithic refractory can suitably be used. The application method may, for example, be stamping, vibration application, casting or tamping, but is not limited thereto.

### EXAMPLES

Now, Examples (Examples 1 to 5) of the present invention and Comparative Examples (Examples 6 to 9) will be described. Various materials were weighed so that the blend proportions of the materials (units: parts by mass, hereinafter referred to simply as parts) would be as shown in Table 1 or 2 and mixed by a universal mixer to obtain a kneaded product. This kneaded product was tamped into a mold having internal size of 40 mm × 40 mm × 160 mm by a gavel, aged for a predetermined period of time, then removed from the mold and aged at room temperature for 24 hours to obtain a test specimen, whereupon the workability and compression strength were evaluated. The blend composition and the evaluation results are shown in Tables 1 and 2.

Here, various materials in Tables 1 and 2 are as follows.

Particles Z1: Fused zirconia particles (glass phase: 6%, Fe₂O₃: 0.07%, the rest: ZrO₂ crystals phase), particle diameters: 0.3 to 4.76 mm.

Particles Z2: Fused zirconia particles (glass phase: 6%, Fe₂O₃: 0.08%, the rest: ZrO₂ crystals phase), particle diameters: less than 0.3 mm.

Particles Z3: Non-fused zirconia particles (tradename: BR-90G, manufactured by Fukushima Steel Works Co., Ltd.), particles diameters: less than 0.105 mm.

Particles A: Sintered alumina, particle diameters: less than 44 µm.

Particles S: Fumed silica (tradename: LP-A, manufactured by Asahi Glass Ceramics Co., Ltd.), average particle diameter: 0.8 µm.

Phosphoric acid: 75% orthophosphoric acid aqueous solution.

Phosphate: sodium metaphosphate.

### EVALUATION METHODS

Workability: At the time of tamping the above-mentioned test specimen, the tamped degree of the material was visually evaluated.

Compression strength (kPa): The above test specimen was evaluated in accordance with JIS R2615.

**TABLE 1**

| | Ex. 1 | Ex. 2 | Ex. 3 | EX. 4 | Ex. 5 |
|---|---|---|---|---|---|
| Particles Z1 | 38.0 | 38.0 | 38.0 | 38.0 | 38.0 |
| Particles Z2 | 43.0 | 43.0 | 43.0 | 43.0 | 43.0 |
| Particles Z3 | 12.0 | 12.0 | 12.0 | 12.0 | 12.0 |
| Particles A | 3 | 4 | 5 | 4 | 4 |
| Particles S | 3 | 3 | 3 | 2 | 4 |
| Phosphoric acid | 3 | 3 | 3 | 3 | 3 |
| Phosphate | 0.1 | 0.1 | 0.1 | 0.1 | 0.1 |
| Workability | Good | Good | Good | Good | Good |
| Compression strength | 180 | 150 | 270 | 190 | 160 |

**TABLE 2**

| | Ex. 6 | Ex. 7 | Ex. 8 | EX. 9 |
|---|---|---|---|---|
| Particles Z1 | 55.0 | 55.0 | 47.4 | 38.0 |
| Particles Z2 | 45.0 | 45.0 | 45.0 | 42.0 |
| Particles Z3 | 0 | 5 | 4.6 | 0 |
| Particles A | 0 | 0 | 0 | 18 |
| Particles S | 0 | 0 | 3 | 2 |
| Phosphoric acid | 5 | 5 | 3 | 5 |
| Phosphate | 0.1 | 0.1 | 0.1 | 0.1 |
| Workability | Bad | Bad | Bad | Poor |
| Compression strength | Not measurable | Not measurable | Not measurable | 230 |

### INDUSTRIAL APPLICABILITY

The present monolithic refractory is a zirconia-based monolithic refractory containing at least about 80% of zirconia particles, and thus, it is excellent in corrosion resistance and penetration resistance against molten glass and anti-contamination property for molten glass and yet strong against formation of defects due to a temperature change, since it contains from 2 to 8% of a glass content. If the zirconia particles contain fine particles of at most 0.1 mm, they improve e.g. the corrosion resistance of the binder portion between aggregates, whereby the corrosion resistance, etc. of the present monolithic refractory against molten glass will further be improved.

If the present monolithic refractory contains a phosphoric acid and/or a phosphate as a binder, it will be excellent in the mechanical strength characteristic and in the corrosion resistance, etc. against molten glass and yet is excellent in the homogeneity of the characteristics due to the dispersibility effect by alumina particles and in the workability at the time of the application.

Further, the present monolithic refractory contains substantially no alumina cement, and the applied body will be accordingly excellent in the surface condition with little irregularities. Thus, it is suitable as a monolithic refractory for the bottom of the glass furnace, such as sub-paving. For example, by paving the present monolithic refractory sub-paving beneath high zirconia-based electrocast refractories, it is possible to prevent vigorous erosion by molten glass (garasu kiji), to prevent foaming caused by the reaction with molten glass and to prevent erosion of the lower portion of the above electrocast refractories due to molten glass intruded to the lower portion of the electrocast refractories, whereby the durability of the furnace can be improved.

Further, the application of the present monolithic refractory is not limited to sub-paving or the like, and it may be used as paving itself depending upon the type of the glass, the application, etc.

## Claims

1. A zirconia-based monolithic refractory **characterized in that** it is a monolithic refractory comprising from 70 to 95 mass% of zirconia particles (as calculated as ZrO₂), from 2 to 12 mass% of alumina particles, from 1 to 10 mass% of a binder and from 2 to 8 mass% of a glass content (including a glass phase if such a glass phase is contained in the zirconia particles), and it contains substantially no alumina cement in the monolithic refractory.

2. The zirconia-based monolithic refractory according to Claim 1, wherein in the zirconia particles, fused zirconia particles are from 80 to 95 mass% as calculated as ZrO₂, and non-fused zirconia particles are from 5 to 20 mass% as calculated as ZrO₂.

3. The zirconia-based monolithic refractory according to Claim 1 or 2, wherein the content of iron in the zirconia particles is at most 0.15 mass% as calculated as Fe₂O₃.

4. The zirconia-based monolithic refractory according to Claim 1, 2 or 3, wherein the particle diameters of the alumina particles are at most 100µm.

5. The zirconia-based monolithic refractory according to Claim 1, 2, 3 or 4, which contains a phosphoric acid and/or a phosphate as the binder.

6. The zirconia-based monolithic refractory according to Claim 1, 2, 3, 4 or 5, which contains fine silica particles as the binder.

7. A tamping material for a glass furnace, wherein the zirconia-based monolithic refractory as defined in any one of Claims 1 to 6 is used.
